# EUROPÄISCHE PATENTSCHRIFT

(11) **EP 1 147 988 B1**
(45) Veröffentlichungstag und Bekanntmachung des Hinweises auf die Patenterteilung: **30.07.2003**
(21) Anmeldenummer: 01101466.9
(22) Anmeldetag: 23.01.2001
(51) Int. Cl.: B65B 69/00, B65G 47/248

(54) **Verfahren und Vorrichtung zum Entladen und/oder Beladen von Tablaren**
Method and device for loading and unloading of trays
Methode et dispositif pour le chargement et le déchargement de panniers

(30) Priorität: 19.04.2000 DE 10019485
(43) Veröffentlichungstag der Anmeldung: 24.10.2001
(73) Patentinhaber: Siemens Aktiengesellschaft, 80333 München (DE)
(72) Erfinder: Wulf, Wilhelm, 90596 Schwanstetten (DE)
(74) Vertreter: Berg, Peter, Dipl.-Ing.

(56) Entgegenhaltungen:
- US-A- 2 951 603
- US-A- 3 044 642
- US-A- 5 464 032

## Beschreibung

Die Erfindung betrifft ein Verfahren und eine Vorrichtung zum Entladen und/oder Beladen von Tablaren, welche einen Boden, mindestens zwei gegenüberliegende Seitenwände und eine offene Oberseite zur Aufnahme mindestens eines Stückgutes aufweisen.

In modernen Logistiksystemen werden immer häufiger Lagerbehälter, sog. Tablare, als Lagerungshilfsmittel eingesetzt. Mit Hilfe dieser Tablare können verschiedenste Artikel mit unterschiedlichsten Formen und Abmessungen automatisch gehandhabt und insbesondere auch vereinzelt automatisch einund ausgelagert werden.

Bei einer Vereinzelung der Stückgüter müssen sehr hohe Materialflußströme gehandhabt und wirtschaftlich durchgeführt werden. Diesen hochdynamischen Prozeß kann man durch automatische Tablarent- und -beladeeinrichtungen, die in der Fördertechnik integriert werden, realisieren. Voraussetzung hierfür ist jedoch, daß der jeweilige Artikel nicht höher ist als ein Tablar, also als die Seitenwände des Tablares. Letztendlich sollen die Artikel, die nicht beschädigt werden dürfen, automatisch zum Beispiel entsprechend Kundenaufträgen mit Hilfe von speziellen Sortieranlagen in Versandeinheiten, d.h. in Kartons oder sonstige Behälter, sortiert werden. Hierfür sind unter anderem automatische Tablarentladeeinrichtungen notwendig, damit die Artikel ohne Ladehilfsmittel auf Förderer transportiert werden können. Analog können Tablare im Wareneingang mit den im wesentlichen gleich aufgebauten Einrichtungen auch vollautomatisch beladen werden.

Es sind bereits verschiedene Einrichtungen bekannt, mit denen einzelne Stückgüter aus Tablaren entnommen werden können, siehe z.B. US-A-3 044 642. Solche Vorrichtungen, die in das jeweilige Tablar hineingreifen und die betreffenden Stückgüter herausnehmen, können jedoch nur beim Stillstand oder nur bei langsamer Geschwindigkeit der Tablare arbeiten. Im übrigen wird die Kommissionierung derzeit noch weitgehend manuell mit Hilfe von Fachbodenregalen, Paternostern oder Durchlaufregalen durchgeführt, wobei ein hoher Personalaufwand erforderlich ist. Dieser Aufwand ist um so höher, je weniger gleiche Artikel pro Auftrag geliefert werden müssen, was insbesondere durch die Entwicklung gefördert wird, daß die Kunden nur für den augenblicklichen Bedarf bestellen und eine eigene Lagerhaltung sparen ("Just in time-Prinzip").

Ziel der Erfindung ist es, ein Verfahren und eine Vorrichtung der eingangs genannten Art anzugeben, womit es möglich ist, Tablare wirtschaftlich in einem hohen Materialdurchflußstrom automatisch zu entladen und analog auch zu beladen.

Dieses Ziel wird erfindungsgemäß mit einem Verfahren erreicht, das folgende Schritte aufweist:
- die einzelnen Tablare werden mit ihrer offenen Oberseite nach unten liegend über eine Ladestrecke mittels eines Tablarförderers geführt,
- die den Tablaren zugeordneten Stückgüter werden gemeinsam mit diesen mit ihren Oberseiten nach unten zwischen den Seitenwänden der Tablare liegend ebenfalls über die Ladestrecke, jedoch mittels eines eigenen Stückgutförderers, geführt,
- zum Entladen werden die Tablare zunächst gemeinsam mit den darin befindlichen Stückgütern in einer Wendestrecke von oben nach unten gewendet und der Ladestrecke zugeführt, und beim Verlassen der Ladestrecke werden die Tablare mittels des Tablarförderers und die Stückgüter mittels des Stückgutförderers über eine Verzweigungsstrecke voneinander getrennt, und/oder
- zum Beladen werden die Tablare mittels des Tablarförderers einerseits und die Stückgüter mittels des Stückgutförderers andererseits jeweils mit ihrer Oberseite nach unten liegend getrennt über die Verzweigungsstrecke zu der Ladestrecke geführt und nach Durchlaufen der Ladestrecke gemeinsam in der Wendestrecke gewendet.

Bei dem erfindungsgemäßen Verfahren werden also die Tablare zum Entladen mit den darin befindlichen Stückgütern im automatischen Durchlauf von oben nach unten gewendet, so daß die Stückgüter aufgrund ihres eigenen Gewichts auf den Stückgutförderer fallen und somit getrennt von den Tablaren aus der Ladestrecke herausgeführt werden können. In gleicher Weise können zum Beladen Tablare und Stückgüter jeweils mit nach unten gekehrter Oberseite zusammengeführt werden, so daß durch das gemeinsame Wenden die Stückgüter in die Tablare eingelagert werden. Mit dieser erfindungsgemäßen Entladung und Beladung im linearen Materialfluß läßt sich ein sehr hoher Materialdurchflußstrom erzielen, nämlich ein Durchsatz von bis zu 10 000 Tablaren pro Stunde, während herkömmliche Entlade- und Beladeanlagen allenfalls bis zu 300 Tablare pro Stunde verarbeiten können.

Während der gemeinsame Wendevorgang der Tablare mit den darin befindlichen Stückgütern in jedem Fall automatisch vor dem Entladen bzw. nach dem Beladen der Tablare erfolgt, könnten Tablare und Stückgüter auch in nach unten gekehrter Position aus der Verzweigungsstrecke entnommen oder dieser zugeführt werden. Dies könnte beispielsweise dann der Fall sein, wenn leere Tablare bereits in nach unten gewendeter Position angeliefert werden oder wenn Stückgüter wahlweise nach oben oder unten liegend weitertransportiert werden können.

Vorzugsweise werden aber die Tablare beim Entladen in der Verzweigungsstrecke gewendet, so daß sie wieder mit der Unterseite aufliegend auf einen Förderer transportiert werden können. Auch die Stückgüter können wieder um 180° von oben nach unten gedreht werden, zum Beispiel, wenn sie etikettiert sind und der Barcode lesbar sein muß. In gleicher Weise können beim Beladen sowohl die Tablare als auch die Stückgüter zunächst in der Normalposition angeliefert und in der Verzweigungsstrecke gedreht werden, bevor sie zur Ladestrecke hin zusammengeführt werden. Beim Zusammenführen sollten der Tablarförderer und der Stückgutförderer vorzugsweise in ihrer Fördergeschwindigkeit synchronisiert werden, damit die Stückgüter jeweils mittig unter dem Tablar zu liegen kommen.

Eine erfindungsgemäße Vorrichtung zum Entladen und/oder Beladen von Tablaren der eingangs genannten Art weist folgende Merkmale auf:
- eine zentrale Ladestrecke wird gebildet durch einen Tablarförderer mit zwei im Abstand laufenden Riemen sowie einen innerhalb und/oder unterhalb des Tablarförderers laufenden Stückgutförderer, wobei der Abstand der Riemen an den Abstand der Seitenwände der Tablare angepaßt ist, um die Tablare mit ihren offenen Oberseiten nach unten auf ihren Seitenwänden zu stützen und den zwischenliegenden Raum freizuhalten, und wobei der Stückgutförderer so angeordnet ist, daß auf ihm mit ihrer Oberseite nach unten liegende Stückgüter zwischen den Seitenwänden der Tablare geführt werden,
- an einem ersten Ende der Ladestrecke schließt eine Wendestrecke an, in der mit den Stückgütern beladene Tablare geführt und um 180° gewendet werden,
- an ihrem zweiten Ende geht die Ladestrecke in eine Verzweigungsstrecke über, in welcher der Tablarförderer und der Stückgutförderer mit zunehmender Entfernung von der Ladestrecke mehr voneinander getrennt verlaufen, und
- die Laufrichtung aller Fördereinrichtungen ist so einstellbar,
- daß zum Entladen mit Stückgütern beladene Tablare über die Wendestrecke zu der Ladestrecke geführt werden und daß nach Verlassen der Ladestrecke die Tablare mittels des Tablarförderers und die Stückgüter mittels des Stückgutförderers getrennt voneinander die Verzweigungsstrecke durchlaufen, und/oder
- daß zum Beladen die Tablare mittels des Tablarförderers und die Stückgüter mittels des Stückgutförderers jeweils mit ihrer Oberseite nach unten liegend getrennt über die Verzweigungsstrecke zu der Ladestrecke und nach Verlassen der Ladestrecke gemeinsam über die Wendestrecke geführt werden.

Um eine möglichst geringe Fallhöhe der Stückgüter beim Entladen zu erreichen, ist vorzugsweise der Tablarförderer ein Riemenförderer mit zwei im Abstand geführten Riemen, während der Stückgutförderer ein Gurtförderer ist, dessen Gurt schmäler ist als der Abstand der Riemen, so daß der Gurt im Bereich der Ladestrecke zumindest teilweise zwischen den Riemen und nur geringfügig unterhalb der Riemenoberseite läuft.

In bevorzugter Ausgestaltung der erfindungsgemäßen Vorrichtung ist weiterhin im Bereich der Verzweigungsstrecke an dem Tablarförderer eine Tablar-Wendevorrichtung und/oder an dem Stückgutförderer eine Stückgut-Wendevorrichtung vorgesehen. Als Wendevorrichtungen kommen verschiedene bekannte Förderer mit Wendeeinrichtungen in Betracht, beispielsweise 180°-Wendel-Gurtförderer oder auch ein Gurtschraubenförderer. In jedem Fall sind die Wendevorrichtungen in der Wendestrecke, bei der Tablarwendevorrichtung oder bei der Stückgutwendevorrichtung mit einem Gegenförderer zu versehen, damit die Tablare und Stückgüter sowohl gemeinsam als auch getrennt jeweils in ihrer Position auf dem jeweiligen Förderer stabil gehalten werden. Als Gegenförderer können beispielsweise Rollenförderer verwendet werden, deren Rollen mit Schaumstoff ummantelt sind und federnd an den gegenüberliegenden Hauptförderer angepreßt werden. Diese Röllchen können hintereinander, je nach Anwendungsfall zusätzlich auch nebeneinander angeordnet sein. Es ist aber auch möglich, als Gegenförderer einen Gurtförderer zu verwenden, wobei der Fördergurt mit einer entsprechenden Schaumstoffauflage versehen ist und federnd an den gegenüberliegenden Hauptförderer angepreßt wird.

Die Erfindung wird nachfolgend an einem Ausführungsbeispiel näher erläutert. Es zeigt
Figur 1 ein mit einem Stückgut beladenes Tablar,
Figur 2 eine Prinzipskizze einer erfindungsgemäßen Tablarentlade- und -beladeeinrichtung.

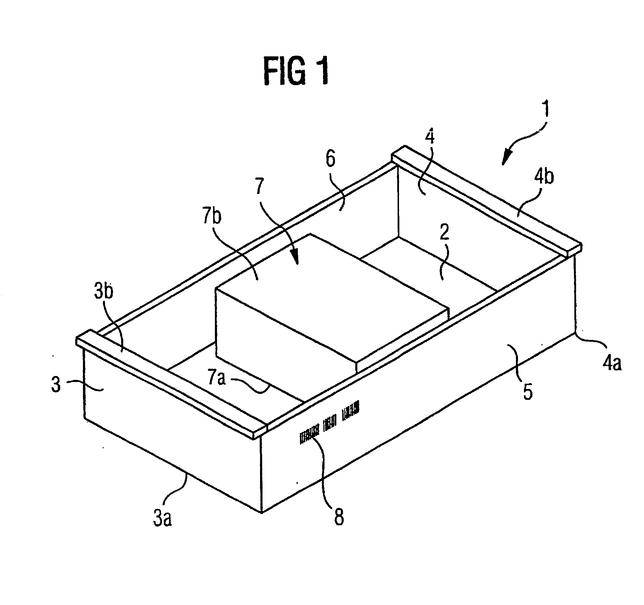

Das in Figur 1 gezeigte Tablar 1 ist ein mehr oder weniger flacher Lagerbehälter, der einen Boden 2 sowie Seitenwände 3 und 4 mit jeweils einer Oberkante oder Ziehkante 3b bzw. 4b, im vorliegenden Beispiel auch jeweils eine Vorderwand 5 und eine Rückwand 6 aufweist. Die Größe und Form des Tablars kann sehr unterschiedlich sein, doch müssen die Tablare in einer Anlage natürlich alle zumindest in Breite und Höhe gleich sein, damit sie automatisch gehandhabt werden können. Die Höhe wird durch die Seitenwände 3 und 4 festgelegt, wobei die Unterkanten 3a und 4a der Seitenwände die Unterseite und die Oberkanten 3b und 4b die (offfene) Oberseite des gezeigten Tablars bestimmen. In dem Tablar ist ein nicht näher definiertes Stückgut 7 angeordnet, dessen Unterseite mit 7a und dessen Oberseite mit 7b bezeichnet sind. Um eine automatische Verarbeitung zu ermöglichen, darf die Höhe des Stückgutes nicht höher sein als die Höhe des Tablars, die durch die Kanten 3a und 4a sowie 3b und 4b festgelegt ist. Natürlich können in einem Tablar auch mehrere Stückgüter angeordnet sein. Zur automatischen Identifizierung trägt das Tablar auf der Wand 5 einen Strichcode 8.

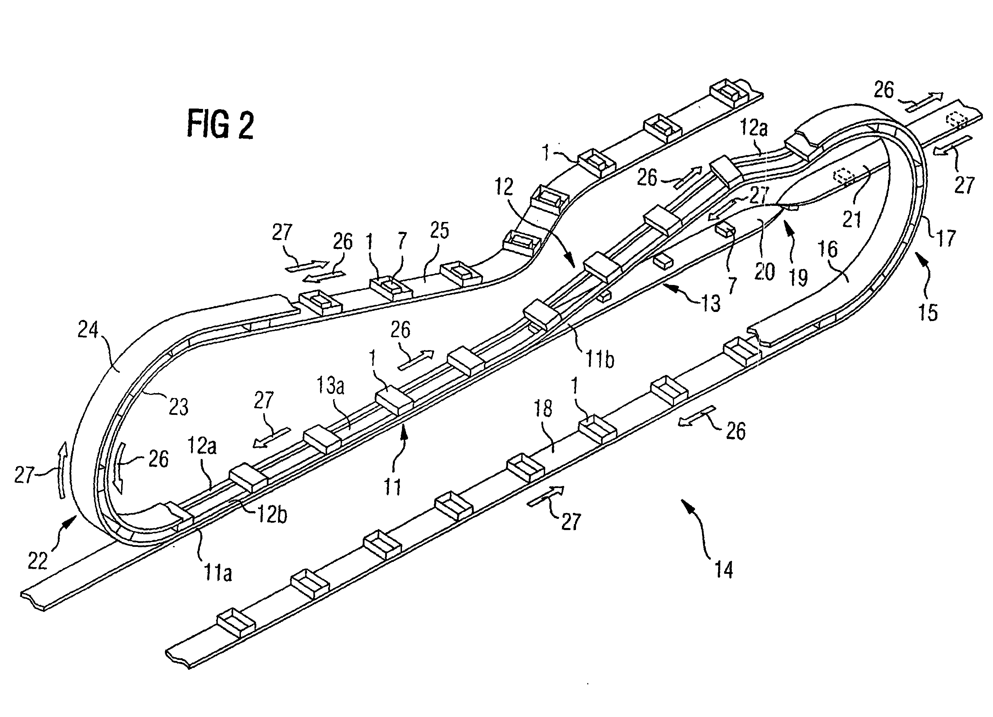

Die automatische Entlade- und Beladevorrichtung ist schematisch in Figur 2 gezeigt. Dabei sind jeweils nur die für die Entlade- und Beladefunktion wesentlichen Abschnitte der Fördereinrichtungen schematisch dargestellt, während die für die Gesamtfunktion unerläßlichen Ergänzungselemente, wie etwa Antriebe, Rücklaufstrecken der Förderelemente, Halte- und Begrenzungselemente usw. der Übersichtlichkeit halber weggelassen sind.

Zentraler Teil der Vorrichtung ist eine Ladestrecke 11, die zwischen einem ersten Ende 11a und einem zweiten Ende 11b von zwei übereinander laufenden Fördereinrichtungen gebildet wird, nämlich einem Tablarförderer 12 und einem Stückgutförderer 13. Der Tablarförderer besitzt zwei im Abstand voneinander laufende Riemen 12a und 12b, deren Abstand dem Abstand der Seitenwände 3 und 4 bzw. der Oberkanten 3b und 4b der Tablare 1 entspricht. Der Stückgutförderer 13 besitzt einen Fördergurt 13a, der zwischen den Riemen 12a und 12b mit gleicher Geschwindigkeit wie diese läuft. Dabei ist die Oberfläche des Gurts 13a nur wenig unterhalb der Oberfläche der Riemen 12a und 12b angeordnet.

An dem Ende 11b der Ladestrecke 11 schließt sich eine Verzweigungsstrecke 14 an, in der sich der Tablarförderer 12 von dem darunterliegenden Stückgutförderer 13 abhebt und sich mit zunehmender Entfernung von der Ladestrecke 11 von diesem in der Höhe entfernt. An dem freien Ende 12a des Tablarförderers 12 schließt sich eine Tablar-Wendevorrichtung 15 an, im vorliegenden Beispiel durch einen 180°-Wendel-Gurtförderer 16 und einen zugehörigen Gegenförderer 17 gebildet. Danach schließt sich eine gerade Leergut-Förderstrecke 18 an, die im Beispiel durch einen Gurtförderer schematisch gezeigt ist. Der Stückgutförderer 13 geht im Anschluß an das Ende 11b der Ladestrecke in eine Stückgut-Wendevorrichtung 19 über, die im vorliegenden Beispiel durch einen Schraubenförderer 20 gebildet ist. Um ein Herausfallen der Stückgüter beim Wenden zu verhindern, muß mit dem Schraubenförderer natürlich ein Gegenförderer vorgesehen werden, der aber der Übersichtlichkeit halber nicht gezeigt ist. An die Stückgut-Wendevorrichtung 19 schließt sich eine gerade Stückgut-Förderstrecke 21 an, auf der die Stückgüter mit ihrer Oberseite 7b nach oben liegend transportiert werden.

An das entgegengesetzte Ende 11a der Ladestrecke schließt sich eine Wendestrecke 22 an, die durch einen 180°-Wendel-Gurtförderer 23 und einen entsprechenden Gegenförderer 24 gebildet ist. An deren Ende schließt sich eine gerade Vollgut-Förderstrecke für mit Stückgütern 7 beladene Tablare 1 an.

Die beschriebene Vorrichtung dient nun zur Entladung von Tablaren, wenn alle Fördereinrichtungen in Richtung der Pfeile 26 betrieben werden, und sie dient zur Beladung der Tablare, wenn alle Fördereinrichtungen in umgekehrter Richtung, also in Richtung der Pfeile 27 laufen.

Zur Entladung werden also beladene Tablare 1 mit den darin befindlichen Stückgütern 7 über die gerade Förderstrecke 25 zugeführt, dann mit Hilfe der Wendestrecke 23 gemeinsam auf dem Kopf gestellt, so daß sie mit ihren Oberseiten nach unten auf die Ladestrecke 11 gelangen. Auf dieser Ladestrecke 11 liegen die einzelnen Tablare mit ihrer offenen Oberseite nach unten, so daß die Oberkanten 3b und 4b der Seitenwände 3 und 4 auf den Riemen 12a und 12b aufliegen, während die jeweils dazwischen befindlichen Stückgüter 7 frei zwischen den Riemen nach unten fallen und auf dem Gurt 13a des Stückgutförderers 13 transportiert werden. In der Praxis liegt die Oberfläche des Fördergurtes 13a zum Beispiel 5 mm unterhalb der Riemenoberkante, so daß die Stückgüter nur eine geringe Fallhöhe erfahren; sie werden parallel und mit der gleichen synchronisierten Geschwindigkeit zu den Tablaren transportiert. Am Ende der Ladestrecke 11 steigt der Tablarförderer 12 in der Verzweigungsstrecke 14 an und hebt damit die nunmehr leeren Tablare 1 von den Stückgütern ab. Die leeren Tablare durchlaufen die Tablar-Wendevorrichtung 17, erfahren dadurch eine vertikale 180°-Drehung und werden dann wieder mit ihrer Unterseite nach unten aufliegend auf der geraden Leergut-Förderstrecke 18 weiter transportiert.

Die Stückgüter 7 werden in dem Schraubenförderer 20 in der Verzweigungsstrecke 14 ebenfalls um 180° gewendet, so daß sie wieder mit ihrer Oberseite nach oben liegend über die gerade Stückgut-Förderstrecke 21 transportiert werden.

Zum Beladen wird die gesamte Anlage in Gegenrichtung angetrieben, das heißt, daß alle Förderer in Richtung der Pfeile 27 laufen. In diesem Fall werden die leeren Tablare über die gerade Leergut-Förderstrecke 18 antransportiert, über die Tablar-Wendevorrichtung 17 um 180° gewendet, so daß sie mit ihrer offenen Oberseite nach unten auf den Riemen 12a und 12b des Tablarförderers 12 aufliegend über die Verzweigungsstrekke 14 zu der Ladestrecke 11 geführt werden. Sie nähern sich dabei an die Stückgüter 7 an, die über die gerade Stückgut-Förderstrecke 21 und den Schraubenförderer 20 ebenfalls der Ladestrecke 11 zugeführt werden. Durch eine entsprechende Synchronisierung wird sichergestellt, daß jeweils ein nach unten gekehrtes Stückgut 7 genau unterhalb eines nach unten gekehrten Tablars zu liegen kommt, so daß jeweils ein Stückgut innerhalb der Seitenwände 3 und 4 eines Tablars zu liegen kommt und so über die Ladestrecke transportiert wird. Am Ende 11a der Ladestrecke werden dann jeweils ein Tablar 1 und ein Stückgut 7 gemeinsam in die Wendestrecke 22 geführt, gemeinsam um 180° gewendet und dann mit den Oberseiten nach oben liegend über die gerade Vollgut-Förderstrecke 25 abgeführt.

## Patentansprüche

1. Verfahren zum Entladen und/oder Beladen von Tablaren (1), welche einen Boden, mindestens zwei gegenüberliegende Seitenwände (3,4,5,6) und eine offene Oberseite aufweisen und mindestens ein Stückgut (7) aufzunehmen vermögen, mit folgenden Schritten:
- die einzelnen Tablare (1) werden mit ihrer offenen Oberseite (3b,4b) nach unten liegend über eine Ladestrecke (11) mittels eines Tablarförderers (12) geführt,
- die den Tablaren (1) zugeordneten Stückgüter (7) werden gemeinsam mit diesen mit ihren Oberseiten (7b) nach unten zwischen den Seitenwänden (3,4) der Tablare (1) liegend ebenfalls über die Ladestrecke (11), jedoch mittels eines eigenen Stückgutförderers (13) geführt,
- zum Entladen werden die Tablare (1) zunächst gemeinsam mit den darin befindlichen Stückgütern (7) in einer Wendestrecke (22) von oben nach unten gewendet und der Ladestrecke (11) zugeführt, und beim Verlassen der Ladestrecke (11) werden die Tablare (1) mittels des Tablarförderers (12) und die Stückgüter (7) mittels des Stückgutförderers (13) über eine Verzweigungstrecke (14) voneinander getrennt, und/oder
- zum Beladen werden die Tablare (1) mittels des Tablarförderers (12) einerseits und die Stückgüter (7) mittels des Stückgutförderers (13) andererseits jeweils mit ihrer Oberseite (3b,4b) nach unten liegend getrennt über die Verzweigungsstrecke (14) zu der Ladestrecke (11) geführt und nach Durchlaufen der Ladestrecke (11) gemeinsam in der Wendestrecke gewendet.

2. Verfahren nach Anspruch 1,
**dadurch gekennzeichnet, daß** beim Entladen die Tablare (1) und/oder die Stückgüter (7) in der Verzweigungsstrecke (14) unabhängig voneinander gewendet werden.

3. Verfahren nach Anspruch 1 oder 2,
**dadurch gekennzeichnet, daß** zumindest zum Beladen der Tablarförderer (12) und der Stückgutförderer (13) bezüglich ihrer Fördergeschwindigkeit synchronisiert werden.

4. Verfahren nach einem der Ansprüche 1 bis 3,
**dadurch gekennzeichnet, daß** die Tablare (1) und die Stückgüter (7) sowohl bei einem gemeinsamen Wendevorgang als auch bei getrennten Wendevorgängen jeweils mittels eines Gegenförderers (17;24) in ihrer Position auf ihrer Fördereinrichtung (16;23;20) gehalten werden.

5. Vorrichtung zum Entladen und/oder Beladen von Tablaren (1) von bzw. mit Stückgütern (7), wobei die Tablare (1) jeweils einen Boden (2), mindestens zwei gegenüberliegende Seitenwände (3,4:5,6) und eine offene Oberseite (3b,4b) zur Aufnahme mindestens eines Stückgutes (7) aufweisen, mit folgenden Merkmalen:
- eine zentrale Ladestrecke (11) wird gebildet durch einen Tablarförderer (12) mit zwei im Abstand voneinander laufenden Riemen (12a,12b) sowie einen innerhalb und/oder unterhalb des Tablarförderers (12) laufenden Stückgutförderer (13), wobei der Abstand der Riemen an den Abstand der Seitenwände (3,4) der Tablare (1) angepaßt ist, um die Tablare (1) mit ihrer offenen Oberseite (3b,4b) nach unten auf den Seitenwänden (3,4) zu stützen und den zwischenliegenden Raum freizuhalten und wobei der Stückgutförderer (13) so angeordnet ist, daß auf ihm mit ihrer Oberseite (7b) nach unten liegende Stückgüter (7) zwischen den Seitenwänden (3,4) der Tablare (1) geführt werden,
- an einem ersten Ende (11a) der Ladestrecke (11) schließt eine Wendestrecke (22) an, in der mit den Stückgütern (7) beladene Tablare (1) geführt und um 180° gewendet werden,
- an ihrem zweiten Ende (11b) geht die Ladestrecke (11) in eine Verzweigungsstrecke (14) über, in welcher der Tablarförderer (12) und der Stückgutförderer (13) mit zunehmender Entfernung von der Ladestrecke (11) mehr voneinander getrennt verlaufen, und
- die Laufrichtung aller Fördereinrichtungen (12,13,17,18,23,25) ist so einstellbar,
- daß zum Entladen mit Stückgütern beladene Tablare (1) über die Wendestrecke (22) zu der Ladestrecke (11) geführt werden und daß nach Verlassen der Ladestrecke (11) die Tablare (1) mittels des Tablarförderers (12) und die Stückgüter (7) mittels des Stückgutförderers (13) getrennt voneinander die Verzweigungsstrecke durchlaufen, und/oder
- daß zum Beladen die Tablare (1) mittels des Tablarförderers (12) und die Stückgüter (7) mittels des Stückgutförderers (13) jeweils mit ihrer Oberseite (3b,4b;7b) nach unten liegend getrennt über die Verzweigungsstrecke (14) zu der Ladestrecke (11) und nach Verlassen der Ladestrecke (11) gemeinsam über die Wendestrecke (22) geführt werden.

6. Vorrichtung nach Anspruch 5,
**dadurch gekennzeichnet, daß** der Tablarförderer (12) ein Riemenförderer mit zwei im Abstand geführten Riemen (12a,12b) ist und daß der Stückgutförderer (13) ein Gurtförderer ist, dessen Gurt (13a) schmäler ist als der Abstand der Riemen (12a,12b) und daß der Gurt (13a) im Bereich der Ladestrecke 811) zumindest teilweise zwischen den Riemen (12a,12b) läuft.

7. Vorrichtung nach Anspruch 5 oder 6,
**dadurch gekennzeichnet, daß** im Bereich der Verzweigungsstrecke (14) an den Tablarförderer (12) eine Tablar-Wendevorrichtung (15) und/oder an dem Stückgutförderer (13) eine Stückgut-Wendevorrichtung (19) vorgesehen ist.

8. Vorrichtung nach einem der Ansprüche 5 bis 7,
**dadurch gekennzeichnet, daß** die Tablar-Wendevorrichtung (15) und/oder die Stückgut-Wendevorrichtung durch einen 180°-Wendel-Gurtförderer (15) mit einem Gegenförderer (16) gebildet ist bzw. sind.

9. Vorrichtung nach einem der Ansprüche 5 bis 7,
**dadurch gekennzeichnet, daß** die Stückgut-Wendevorrichtung (19) und/oder die Tablar-Wendevorrichtung durch einen Gurt-Schraubenförderer (20) mit einem entsprechenden Gegenförderer gebildet ist bzw. sind.

10. Vorrichtung nach einem der Ansprüche 5 bis 9,
**dadurch gekennzeichnet, daß** die Wendestrecke (22) durch einen 180°-Wendel-Gurtförderer (23) mit einem Gegenförderer (24) gebildet ist.

11. Vorrichtung nach einem der Ansprüche 8 bis 10,
**dadurch gekennzeichnet, daß** als Gegenförderer Rollenförderer verwendet sind, deren Rollen mit Schaumstoff ummantelt sind und federnd angepreßt werden.

12. Vorrichtung nach einem der Ansprüche 8 bis 10,
**dadurch gekennzeichnet, daß** als Gegenförderer Gurtförderer verwendet werden, deren Gurte jeweils eine Auflage aus Schaumstoff tragen und federnd an den Hauptförderer angepreßt werden.

## Claims

1. Process for unloading and/or loading trays (1), which have a base, at least two opposite side walls (3, 4, 5, 6) and an open top side and are capable of accommodating at least one article (7), having the following steps:
- the individual trays (1) are guided over a loading section (11), by means of a tray conveyor (12), with their open top side (3b, 4b) located in the downward direction,
- the articles (7) assigned to the trays (1) are likewise guided over the loading section (11), albeit by means of a dedicated article conveyor (13), together with said trays and with their top sides (7b) located in the downward direction between the side walls (3, 4) of the trays (1),
- for unloading purposes, the trays (1), in the first instance together with the articles (7) located therein, are turned upside down in a turning section (22) and fed to the loading section (11) and, upon leaving the loading section (11), a branching section (14) is used in order to separate the trays (1) and the articles (7) from one another, by means of the tray conveyor (12) and the article conveyor (13), respectively, and/or
- for loading purposes, the tray conveyor (12), on the one hand, and the article conveyor (13), on the other hand, are respectively used to guide the trays (1) and the articles (7) to the loading section (11), via the branching section (14), separately, in each case with their top side (3b, 4b) located in the downward direction, and, once they have passed through the loading section (11), the trays and articles are turned together in the turning section.

2. Process according to Claim 1, **characterized in that**, during unloading, the trays (1) and/or the articles (7) are turned independently of one another in the branching section (14).

3. Process according to Claims 1 or 2, **characterized in that**, at least for loading purposes, the tray conveyor (12) and the article conveyor (13) are synchronized in terms of conveying speed.

4. Process according to one of Claims 1 to 3, **characterized in that** the trays (1) and the articles (7), both in the case of a common turning operation and in the case of separate turning operations, are retained in position on their conveying arrangement (16; 23; 20) in each case by means of a mating conveyor (17; 24).

5. Apparatus for unloading trays (1) of articles (7) and/or loading them therewith, the trays (1) each having a base (2), at least two opposite side walls (3, 4; 5, 6) and an open top side (3b, 4b) for accommodating at least one article (7), having the following features:
- a central loading section (11) is formed by a tray conveyor (12) with two spaced-apart straps (12a, 12b) and by an article conveyor (13) which runs within and/or beneath the tray conveyor (12), the spacing between the straps being adapted to the spacing between the side walls (3, 4) of the trays (1) in order to support the trays (1) on the side walls (3, 4), with their open top side (3b, 4b) in the downward direction, and to keep the space therebetween free, and the article conveyors (13) being arranged such that articles (7) located on it with their top side (7b) in the downward direction are guided between the side walls (3, 4) of the trays (1),
- a first end (11a) of the loading section (11) is adjoined by a turning section (22), in which trays (1) loaded with the articles (7) are guided and turned through 180°,
- at its second end (11b), the loading section (11) merges into a branching section (14), in which the tray conveyor (12) and the article conveyor (13) run further apart from one another as the distance from the loading section (11) increases, and
- it is possible to adjust the running direction of all the conveying arrangements (12, 13, 17, 18, 23, 25) such
- that, for unloading purposes, trays (1) loaded with articles are guided to the loading section (11) via the turning section (22), and that, once they have left the loading section (11), the trays (1) and the articles (7) pass through the branching section separately from one another, by means of the tray conveyor (12) and the article conveyor (13), respectively, and/or
- that, for loading purposes, the tray conveyor (12) and the article conveyor (13) are respectively used to guide the trays (1) and the articles (7) to the loading section (11), via the branching section (14), separately, in each case with their top side (3b, 4b; 7b) located in the downward direction, and, once they have left the loading section (11), the trays and articles are guided together via the turning section (22).

6. Apparatus according to Claim 5, **characterized in that** the tray conveyor (12) is a strap conveyor with two straps (12a, 12b) guided at a distance apart, and **in that** the article conveyor (13) is a belt conveyor with a belt (13a) which is narrower than the spacing between the straps (12a, 12b), and **in that**, in the region of the loading section 811), the belt (13a) runs, at least in part, between the straps (12a, 12b).

7. Apparatus according to Claim 5 or 6, **characterized in that**, in the region of the branching section (14), a tray-turning means (15) is provided on the tray conveyor (12) and/or an article-turning means (19) is provided on the article conveyor (13).

8. Apparatus according to one of Claims 5 to 7, **characterized in that** the tray-turning means (15) and/or the article-turning means are/is formed by a 180°-turn belt conveyor (15) with a mating conveyor (16).

9. Apparatus according to one of Claims 5 to 7, **characterized in that** the article-turning means (19) and/or the tray-turning means are/is formed by a helical belt conveyor (20) with a corresponding mating conveyor.

10. Apparatus according to one of Claims 5 to 9, **characterized in that** the turning section (22) is formed by a 180°-turn belt conveyor (23) with a mating conveyor (24).

11. Apparatus according to one of Claims 8 to 10, **characterized in that** the mating conveyors used are roller conveyors with rollers which are encased in foam and pressed on resiliently.

12. Apparatus according to one of Claims 8 to 10, **characterized in that** the mating conveyors used are belt conveyors with belts which each bear a foam support and are pressed resiliently onto the main conveyor.

## Revendications

1. Procédé pour le déchargement et/ou le chargement de bacs (1) qui comprennent un fond, au moins deux parois (3, 4, 5, 6) latérales opposées et un dessus ouvert et qui permettent de recevoir au moins un article (7),
comportant les étapes suivantes :
- les bacs (1) individuels sont, au moyen d'un convoyeur (12) de bacs, dirigés sur un parcours (11) de chargement avec leur dessus (3b, 4b) ouvert tourné vers le bas,
- les articles (7) associés aux bacs (1) sont également dirigés sur le parcours (11) de chargement conjointement avec ces derniers, avec leurs dessus (7b) vers le bas, en étant situés entre les parois (3, 4) latérales des bacs (1), mais au moyen d'un propre convoyeur (13) d'articles,
- pour le déchargement, les bacs (1) sont d'abord, conjointement avec les articles (7) qui se trouvent dans ces bacs (1), retournés de haut en bas dans un parcours (22) de retournement et apportés au parcours (11) de chargement, et lorsqu'ils quittent le parcours (11) de chargement, les bacs (1), au moyen du convoyeur (12) de bacs, et les articles (7), au moyen du convoyeur (13) d'articles, sont séparés les uns des autres sur un parcours (14) de bifurcation, et/ou
- pour le chargement, les bacs (1) d'une part, au moyen du convoyeur (12) de bacs, et les articles (7) d'autre part, au moyen du convoyeur (13) d'articles, sont séparément dirigés, respectivement avec leur dessus (3b, 4b) tourné vers le bas, sur le parcours (14) de bifurcation vers le parcours (11) de chargement, et après avoir parcouru le parcours (11) de chargement, sont conjointement retournés dans le parcours de retournement.

2. Procédé suivant la revendication 1, **caractérisé en ce que**, lors du déchargement, les bacs (1) et/ou les articles (7) sont retoumés indépendamment les uns des autres dans le parcours (14) de bifurcation.

3. Procédé suivant la revendication 1 ou 2, **caractérisé en ce que**, au moins pour le chargement, les vitesses de transport du convoyeur (12) de bacs et du convoyeur (13) d'articles sont synchronisées.

4. Procédé suivant l'une des revendications 1 à 3, **caractérisé en ce que** les bacs (1) et les articles (7), tant lors d'un processus de retournement conjoint que lors de processus de retoumement séparés, sont respectivement maintenus dans leur position sur leur moyen (16 ; 23 ; 20) de transport au moyen d'un convoyeur (17 ; 24) conjugué.

5. Dispositif pour décharger des articles (7) de bacs (1) et/ou les charger sur ces derniers, les bacs (1) comprenant chacun un fond (2), au moins deux parois (3, 4 ; 5, 6) latérales opposées et un dessus (3b, 4b) ouvert afin de recevoir au moins un article (7),
comportant les caractéristiques suivantes :
- un parcours (11) de chargement central est formé par un convoyeur (12) de bacs comprenant deux courroies (12a, 12b) s'étendant à distance l'une de l'autre ainsi que par un convoyeur (13) d'articles s'étendant à l'intérieur du convoyeur (12) de bacs et/ou en dessous de ce dernier, la distance entre les courroies étant adaptée à la distance entre les parois (3, 4) latérales des bacs (1), afin de soutenir les bacs (1) sur les parois (3, 4) latérales avec leur dessus (3b, 4b) ouvert vers le bas et de libérer l'espace intermédiaire, et le convoyeur (13) d'articles étant disposé de telle sorte que les articles (7), placés sur lui avec leur dessus (7b) tourné vers le bas, sont dirigés entre les parois (3, 4) latérales des bacs (1),
- à une première extrémité (11a) du parcours (11) de chargement se raccorde un parcours (22) de retournement dans lequel les bacs (1) chargés des articles (7) sont dirigés et retournés à 180°,
- à sa deuxième extrémité (11b), le parcours (11) de chargement se poursuit par un parcours (14) de bifurcation, dans lequel le convoyeur (12) de bacs et le convoyeur (13) d'articles s'éloignent de plus en plus l'un de l'autre plus on s'éloigne du parcours (11) de chargement, et
- la direction de marche de tous les convoyeurs (12, 13, 17, 18, 23, 25) peut être réglée de telle sorte
- que, pour le déchargement, les bacs (1) chargés d'articles sont dirigés sur le parcours (22) de retournement vers le parcours (11) de chargement et, après avoir quitté le parcours (11) de chargement, les bacs (1), au moyen du convoyeur (12) de bacs, et les articles (7), au moyen du convoyeur (13) d'articles, parcourent séparément les uns des autres le parcours de bifurcation, et/ou
- que, pour le chargement, les bacs (1), au moyen du convoyeur (12) de bacs, et les articles (7), au moyen du convoyeur (13) d'articles, sont séparément dirigés, respectivement avec leur dessus (3b, 4b ; 7b) tourné vers le bas, sur le parcours (14) de bifurcation vers le parcours (11) de chargement, et après avoir quitté le parcours (11) de chargement, sont conjointement dirigés sur le parcours (22) de retournement.

6. Dispositif suivant la revendication 5, **caractérisé en ce que** le convoyeur (12) de bacs est un convoyeur à courroies avec deux courroies (12a, 12b) dirigées à distance entre elles, et **en ce que** le convoyeur (13) d'articles est un convoyeur à bande dont la bande (13a) est plus étroite que la distance entre les courroies (12a, 12b), et **en ce que** la bande (13a) circule au moins partiellement.

7. Dispositif suivant la revendication 5 ou 6, **caractérisé en ce qu'**il est prévu dans la zone du parcours (14) de bifurcation sur le convoyeur (12) de bacs un dispositif (15) de retournement de bacs et/ou sur le convoyeur (13) d'articles un dispositif (19) de retournement d'articles.

8. Dispositif suivant l'une des revendications 5 à 7, **caractérisé en ce que** le dispositif (15) de retournement de bacs et/ou le dispositif de retournement d'articles est/sont formé(s) par un convoyeur (16) à bande en hélice à 180°, doté d'un convoyeur (17) conjugué.

9. Dispositif suivant l'une des revendications 5 à 7, **caractérisé en ce que** le dispositif (19) de retoumement d'articles et/ou le dispositif de retournement de bacs est/sont formé(s) par un convoyeur (20) à vis sans fin à bande, doté d'un convoyeur conjugué correspondant.

10. Dispositif suivant l'une des revendications 5 à 9, **caractérisé en ce que** le parcours (22) de retournement est formé par un convoyeur (23) à bande en hélice à 180°, doté d'un convoyeur (24) conjugué.

11. Dispositif suivant l'une des revendications 8 à 10, **caractérisé en ce qu'**on utilise comme convoyeurs conjugués des convoyeurs à rouleaux dont les rouleaux sont enrobés de matériau alvéolaire et pressés élastiquement en application.

12. Dispositif suivant l'une des revendications 8 à 10, **caractérisé en ce qu'**on utilise comme convoyeurs conjugués des convoyeurs à bande dont les bandes portent respectivement une surface d'appui en matériau alvéolaire et sont pressées élastiquement en application contre le convoyeur principal.
